# EUROPÄISCHE PATENTSCHRIFT

(11) **EP 3 294 649 B1**
(45) Veröffentlichungstag und Bekanntmachung des Hinweises auf die Patenterteilung: **27.11.2024**
(21) Anmeldenummer: 16805834.5
(22) Anmeldetag: 05.12.2016
(51) Int. Cl.: B65G 21/20

(54) **FÜHRUNGSEINRICHTUNG INSBESONDERE ZUR TRANSPORTFÜHRUNG VON BEHÄLTNISSEN**
GUIDE DEVICE, IN PARTICULAR FOR THE GUIDED TRANSPORT OF CONTAINERS
DISPOSITIF DE GUIDAGE EN PARTICULIER POUR GUIDER LE TRANSPORT DE RÉCIPIENTS

(30) Priorität: 03.12.2015 DE 102015121081
(43) Veröffentlichungstag der Anmeldung: 21.03.2018
(73) Patentinhaber: Krones AG, 93073 Neutraubling (DE)
(72) Erfinder: SCHÖNFELDER, Markus, 93073 Neutraubling (DE)
(74) Vertreter: Bittner, Bernhard
(86) Internationale Anmeldenummer: PCT/EP2016/079724
(87) Internationale Veröffentlichungsnummer: WO 2017/093556

(56) Entgegenhaltungen:
- JP-A- 2011 178 550
- JP-A- H0 441 319
- JP-U- H0 496 432
- US-A- 5 291 988
- US-A- 6 059 096
- US-A1- 2013 180 830

## Beschreibung

Die vorliegende Erfindung bezieht sich auf eine Führungseinrichtung, insbesondere zur Verwendung beim Transport von Behältnissen. Aus dem Stand der Technik sind diverse Behältnisherstellungseinrichtungen bekannt, bei denen die Behältnisse beispielsweise von einer ersten Behandlungsvorrichtung zu einer weiteren Behandlungsvorrichtung transportiert werden, beispielsweise von einer Blasformmaschine zu einer dieser nachgeordneten Füllmaschine, welche die Behältnisse mit einer Flüssigkeit befüllt. Dabei sind diese Führungseinrichtungen, wie beispielsweise Führungsgeländer und dergleichen üblicherweise an bestimmte Behältnisse angepasst und insbesondere an deren Geometrien, wie beispielsweise deren Querschnitt. Bei einer aus dem Stand der Technik bekannten Vorrichtung kann eine Umstellung der Geometrien beispielsweise über konische Führungen und über verschiebbare Sterngeometrien erfolgen. Diese Vorgehensweise hat sich technisch zwar bewährt, ist jedoch relativ aufwendig und auch schwierig reinigbar. Oftmals ist es nicht möglich, eine saubere und sichere Führung eines bestimmten Objekts, wie etwa eines Behältnisses beispielsweise von einem Transportstern zum nächsten Transportstern bzw. einem Behandlungskarussell durchzuführen. So gilt dies beispielsweise für den Transport von Behältnissen von einer Fülleinrichtung zu einem Verschließer.

Der vorliegenden Erfindung liegt daher die Aufgabe zugrunde, derartige Transport- und/oder Führungseinrichtungen einfacher zu gestalten, und insbesondere auch in einfacherer Weise eine Garniturenumstellung, beispielsweise eine Verstellung auf unterschiedliche Behältnisquerschnitte zu ermöglichen. Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Nach Anspruch 1 weist eine erfindungsgemäße Führungseinrichtung zum Kontaktieren und/oder Führen von Objekten und insbesondere von Behältnissen und/oder Bestandteilen von Behältnissen wie insbesondere aber nicht ausschließlich Behältnisverschlüssen eine Kontaktiereinrichtung auf, welche dazu geeignet und bestimmt ist, eine Außenoberfläche des zu führenden Objektes mittels einer Kontaktoberfläche zu berühren, wobei diese Kontaktiereinrichtung weiterhin einen Träger aufweist, der sich entlang einer vorgegebenen Erstreckungsrichtung erstreckt.

Erfindungsgemäß ist an dem Träger eine Vielzahl von Kontaktelementen angeordnet, wobei diese Kontaktelemente dreh- und/oder schwenkbar gegenüber der Erstreckungsrichtung des Trägers sind derart, dass durch diese Drehbewegung ein Abstand zwischen wenigstens einem Abschnitt der Kontaktoberfläche und der Erstreckungsrichtung veränderbar ist.

Es wird daher vorgeschlagen, dass diese Kontaktelemente insbesondere beweglich gegenüber der Erstreckungseinrichtung bzw. der Erstreckungsrichtung angeordnet sind und durch ein Drehen beispielsweise ein Radius der Führungseinrichtung verändert werden kann. Es wird jedoch darauf hingewiesen, dass die vorliegende Erfindung nicht nur auf gekrümmte Führungseinrichtungen anwendbar ist, sondern auch auf geradlinig verlaufende Führungseinrichtungen. Bei den gekrümmt verlaufenden Führungseinrichtungen kann es sich beispielsweise um kreisförmig gekrümmt verlaufende Führungseinrichtungen handeln oder um C-förmig gekrümmt verlaufende Führungseinrichtungen. Die Führungseinrichtung dient insbesondere zum Führen der Behältnisse währen deren Transport.

Durch die Veränderung der Drehstellung der Kontaktelemente kann damit beispielsweise ein Krümmungsradius der Kontaktfläche verändert werden. Insbesondere handelt es sich bei der genannten Fläche der Behältnisse, welche von der Kontaktoberfläche berührt wird, um eine Außenoberfläche der Behältnisse, insbesondere um eine Umfangswandung der Behältnisse. Bei den Behältnissen handelt es sich insbesondere um kreisrunde Behältnisse, es wäre jedoch auch eine Anwendung auf ovale Behältnisse oder auf Behältnisse mit anderen Geometrien denkbar.

Bei den Behältnissen handelt es sich insbesondere um Kunststoffbehältnisse, es wäre jedoch auch denkbar, die Erfindung auf andere Behältnisse, wie beispielsweise Glasbehältnisse oder Dosen also Metallbehältnissse, anzuwenden. Insbesondere handelt es sich bei den Behältnissen um Flaschen. Bei den Behältnissen handelt es sich insbesondere um Behältnisse welche mit Flüssigkeiten oder Feststoffen befüllt werden oder zu befüllen sind.

Bei einer weiteren vorteilhaften Ausführungsform weist die Führungseinrichtung wenigstens eine Stelleinrichtung auf, um die Drehstellung wenigstens eines Kontaktelements gegenüber der Erstreckungsrichtung zu verändern. Dabei kann eine Stelleinrichtung vorgesehen sein, welche beispielsweise eine Antriebseinrichtung, wie einen elektromotorischen, pneumatischen oder hydraulischen Antrieb aufweist, und welche bevorzugt zentral die Drehstellungen wenigstens eines Kontaktelements und bevorzugt mehrerer Kontaktelemente verändert. So kann beispielweise die Stelleinrichtung in einem zentralen oder mittleren Bereich an den Träger angelenkt sein, um so die Drehstellungen der Kontaktelemente zu verändern.

Bei einer weiteren vorteilhaften Ausführungsform weist die Führungseinrichtung eine Kopplungseinrichtung auf, welche eine Drehbewegung eines ersten Kontaktelements gegenüber der Erstreckungsrichtung mit der Drehbewegung eines zweiten Kontaktelements gegenüber der Erstreckungsrichtung koppelt. Vorteilhaft ist eine Kopplungseinrichtung vorgesehen, welche die Drehbewegungen mehrerer Kontaktelemente und bevorzugt aller Kontaktelemente miteinander koppelt.

Bei dieser Kopplungseinrichtung kann es sich beispielsweise um einen stangenartigen Körper handeln, der durch Öffnungen mehrerer beanstandeter Kontaktelemente geschoben bzw. gesteckt ist. Dieser stangenartige Körper kann sich dabei parallel zu der Erstreckungsrichtung und/oder parallel zu dem Träger erstrecken. Weiterhin kann die Kopplungseinrichtung auch ein die Kontaktelemente umgebender Hüllenkörper (und ebenfalls langgestreckt) sein, der dennoch die Drehbewegungen der einzelnen Kontaktelemente miteinander koppelt. Sowohl der langgestreckte stangenartige Körper als auch der Hüllenkörper können bevorzugt gegenüber dem Träger verdreht werden und so auch eine Drehung der einzelnen Kontaktelemente bewirken.

Alternativ oder zusätzlich wäre es auch möglich, dass an dem stangenartigen Körper ein Faltenbalg angeordnet ist. Der stangenartige Körper könnte dabei als Rohr ausgebildet sein. Auch könnte es sich bei dem stangenartigen Körper selbst um einen derartigen Faltenbalg handeln.

Bevorzugt ist der langgestreckte Körper (der insbesondere in Form eines stangenförmigen Körpers oder eines Hüllenkörpers ausgeführt ist) im Wesentlichen drehfest (bezüglich einer Drehung um die Erstreckungsrichtung) mit wenigstens einem, bevorzugt mit mehreren und besonders bevorzugt mit allen Kontaktelementen gekoppelt. Eine derartige Kopplung kann dabei formschlüssig, kraftschlüssig und/oder reibschlüssig erfolgen. Bevorzugt ist der Träger stationär angeordnet und/oder starr ausgebildet. Bevorzugt erstreckt sich der Träger entlang der Erstreckungsrichtung.

Bei einer weiteren bevorzugten Ausführungsform handelt ist die Kontaktiereinrichtung wenigstens teilweise durch einen 3D Druck gefertigt. So wäre es möglich, dass der Träger und/oder die hieran angeordneten Kontaktelement durch einen 3D - Druck entstanden sind. Auch wäre es möglich, lediglich die einzelnen Kontaktelemente mit einem 3D - Druck zu entwerfen. Der Vorteil einer derartigen Vorgehensweise besteht in der Möglichkeit, diese Kontaktiereinrichtung und/oder deren Bestandteile sehr individuell fertigen zu können.

Weiterhin wäre es auch möglich, dass der Hüllenkörper mittels Eingriffselementen mit den einzelnen Kontaktelementen in Verbindung steht. Weiterhin wäre es auch möglich der Hüllenkörper durch einen 3D - Druck gefertigt ist.

Bei einer weiteren vorteilhaften Ausführungsform ist wenigstens ein Kontaktelement und sind bevorzugt mehrere Kontaktelemente exzentrisch gegenüber der Erstreckungsrichtung gelagert. Durch diese exzentrische Lagerung kann bei einer Drehung der Kontaktelemente auch die oben beschriebene Änderung des Abstands zwischen der Kontaktoberfläche und der Erstreckungsrichtung erreicht werden.

Bei einer weiteren vorteilhaften Ausführungsform sind die Kontaktelemente entlang der Erstreckungsrichtung benachbart zueinander angeordnet. Bei einer weiteren vorteilhaften Ausführungsform weisen diese Kontaktelemente zueinander einen Abstand auf, der größer ist als 2 cm. Bei einer weiteren vorteilhaften Ausführungsform weisen die Kontaktelement zueinander einen Abstand auf, der kleiner ist als 10 cm, bevorzugt kleiner als 8 cm, bevorzugt kleiner als 6 cm, bevorzugt kleiner als 4 cm. Bei diesem Abstand handelt es sich insbesondere um den Abstand der auf der Führungsstange (bzw. dem Träger) angeordneten Kontaktelemente. Bevorzugt ist dabei dieser Abstand bezogen auf die Führungsstange (bzw. den Träger). An der Führungsfläche selbst soll vorteilhaft kein oder nur ein sehr geringer Abstand ausgebildet sein. Auf diese Weise wird eine sehr sanfte Führung der Objekte bzw. Behältnisse erreicht. Bevorzugt sind auftretende Spalte an der Führungsfläche bzw. dem führenden Teil kleiner als 4mm, bevorzugt kleiner als 2mm.

Der Abstand zwischen zwei Kontaktelementen wird bevorzugt durch Abstandhalter bewerkstelligt. Die Abstandhalter gleichen bevorzugt Winkelabweichungen von einem zum Nächsten Kontaktelement aus und sorgen so für eine definierte Position der Abstandhalter bezüglich der Umfangsrichtung. Bei einer weiteren vorteilhaften Ausführung bildet ein Abstandhalter ein Paar aus einem Kugelkalottensegment und einer dazu passenden Pfanne. Dies ist vorteilhaft für einen bestimmten und reibungsarmen Verstellvorgang.

Bei einer weiteren vorteilhaften Ausführungsform ist das Kontaktelement scheibenförmig ausgebildet. Besonders bevorzugt stehen die scheibenförmigen Kontaktelemente senkrecht zu der Erstreckungsrichtung.

Erfindungsgemäß weist die Führungseinrichtung einen Hüllenkörper auf, der den Träger wenigstens abschnittsweise umgibt. Dabei umgibt dieser Hüllenkörper wenigstens einen Abschnitt des Trägers in seiner Erstreckungsrichtung vollständig in seiner Umfangsrichtung. Erfindungsgemäß umgibt der besagte Hüllenkörper auch die Kontaktelemente, insbesondere in deren Umfangsrichtung. Damit sind sowohl der Träger als auch die Kontaktelemente innerhalb des genannten Hüllenkörpers angeordnet. Es wäre jedoch auch möglich, dass eine Vielzahl derartiger Hüllenkörper vorgesehen ist, die sich in der Erstreckungsrichtung aneinander anschließen. Es können auch gerade Führungen (Rohre) mit Kurvenstücken kombiniert werden für z.B. einen tangentialen Auslauf aus einem Karussell.

Bei der Erfindung ist der Hüllenkörper im Wesentlichen torsionssteif ausgebildet. So ist es möglich, dass der Hüllenkörper zwar biegbar ist, im Wesentlichen jedoch nicht tordiert werden kann. Durch diese Torsionssteifigkeit wird eine Kopplung der Drehbewegungen der einzelnen Kontaktelemente untereinander ( durch den Hüllenkörper) erreicht.

So könnte es sich bei dem Hüllenkörper beispielsweise um einen Wellenschlauch handeln und/oder um einen Teflonschlauch. Daneben kann auch ein Metallschlauch vorgesehen sein.

Bevorzugt weist der Hüllenkörper einen Aussendurchmesser auf, der größer ist als 50mm, bevorzugt größer als 70mm, bevorzugt größer als 80mm, bevorzugt größer als 80mm, besonders bevorzugt größer als 90mm und besonders bevorzugt größer als 100mm. Bevorzugt weist der Hüllenkörper einen Aussendurchmesser auf, der kleiner ist als 200mm, bevorzugt kleiner als 180mm, bevorzugt kleiner als 160mm, und besonders bevorzugt kleiner als 150mm.

Dabei ist es wünschenswert, wenn dieser Hüllenkörper eine Dehnung in axialer Richtung von mindestens 30%, bevorzugt von wenigstens 40% und besonders bevorzugt von wenigstens 50% bezogen auf die ungespannte Länge vollziehen kann. Diese Längenänderung dient zur Kompensation von Weglängenänderungen bei verschiedenen Einstellvarianten entlang der Führungskontur. Bei einer Ausführung mit Faltenbalg sind bevorzugt die Falten nicht tiefer als 40mm, bevorzugt nicht tiefer als 25 mm. Bevorzugt sind die Falten tiefer als 5mm, bevorzugt tiefer als 10 mm.

Bei einer weiteren bevorzugten Ausführungsform wäre es auch denkbar, dass der Hüllenkörper aus mehreren Segmenten aufgebaut ist. Dabei wäre es denkbar, dass diese mehreren Segmente über Verbindungsmechanismen miteinander zusammengesteckt werden. Auch könnten dabei in den Hüllenkörper bereits die Kontaktelemente integriert sein. So könnte der Hüllenkörper mit den darin angeordneten Kontaktelementen segmentartig aufgebaut sein, wobei die einzelnen Segmente je nach Anwendung zusammengesetzt werden können.

Die Form der Faltenspitzen ist vorteilhaft, wenn sie eine gerade Kontur aufweist und ist besonders vorteilhaft, wenn sie einen konkaven Radius aufweist, der im Wesentlichen und insbesondere exakt dem kleinstmöglichen Radius der Führungskontur entspricht. Dazu ist es von Vorteil für die Funktion, wenn die Summe der Faltenbreite an der Spitze aller Falten der Wegstrecke des zur Führung dienenden Profils möglichst nahe kommt.

Die Wandstärke des Schlauchs sollte bei weiterer vorteilhafter Ausführung größer als 1,0mm, bevorzugt größer als 1,5 mm sein. Dies begünstigt die notwendige Steifigkeit bezüglich der Torsion und des Schwingungsverhaltens der Falten.

Bei einer weiteren vorteilhaften Ausführungsform ist der Hüllenkörper schlauchartig ausgebildet. Vorteilhaft weist die Vorrichtung zwei derartiger Schlauchkörper auf, die jeweils zwei Segmente der Führungseinrichtung, insbesondere einschließlich deren Kontaktelemente umgeben.

Vorteilhaft bildet der Hüllenkörper die Kontaktoberfläche zum Kontaktieren der Behältnisse aus. Es wäre jedoch denkbar, dass an dem Hüllenkörper und insbesondere bezüglich des Trägers außerhalb des Hüllenkörpers weitere Kontaktelemente vorgesehen sind, welche sich insbesondere gemeinsam mit dem Hüllenkörper verdrehen lassen. Diese Ausgestaltung eignet sich insbesondere für Führungssterne, an deren Außenumfang die zu transportierenden Behältnisse gehalten sind.

Bei einer weiteren vorteilhaften Ausführungsform weist die Vorrichtung eine Messeinrichtung auf, welche zum (insbesondere automatischen) Anpassen der Kontaktiereinrichtung auf die jeweilige Anwendung dient. Über eine Frequenzmessung kann ermöglicht werden, dass sich die Garnitur selbst auf das ideale Maß einregelt. Bei zu enger Flaschenführung wird der Hüllkörper zu sehr erregt. Bei keiner Frequenz ist die Garnitur noch nicht nah genug an der Anwendung

Weiterhin ist es denkbar, dass der Hüllenkörper an seiner Außenoberfläche eine Schutzschicht aufweist, beispielsweise eine Schicht, welche den Reibungskoeffizienten mit den zu transportierenden Behältnissen verringert.

Bei einer weiteren vorteilhaften Ausführungsform ist der Hüllenkörper elastisch. Insbesondere ist der Hüllenkörper aus einem elastischen Material, beispielsweise einem Gummimaterial hergestellt. So kann es sich beispielsweise bei dem Hüllenkörper um einen Gummischlauch handeln.

Bei einer weiteren vorteilhaften Ausführungsform liegt der Hüllenkörper unter Spannung an den Kontaktelementen an. So wäre es beispielsweise möglich, dass zum Montieren bzw. Aufziehen des Hüllenkörpers die Kontaktelemente oder Bestandteile derselben zurückgestellt werden und anschließend die Kontaktelemente ausgestellt werden, sodass der Hüllenkörper fest mit den Kontaktelementen verbunden ist. Auf diese Weise kann erreicht werden, dass der Hüllenkörper nicht gegenüber den Kontaktelementen rutscht.

Bei einer weiteren vorteilhaften Ausführungsform ist an den Kontaktelementen wenigstens ein Spannelement angeordnet, welches auf den Hüllenkörper zustellbar ist. So könnte an einem Träger des Kontaktelements ein gegenüber diesem Träger schwenkbares Hebelelement angeordnet sein, welches auf den Hüllenkörper zustellbar ist und so die Verspannung bewirkt.

Bevorzugt weist das Kontaktelement auch wenigstens eine Vorspanneinrichtung auf, welche das Spannelement in Richtung des Hüllenkörpers und insbesondere dessen Innenwandung vorspannt. So könnte beispielsweise ein derartiges Spannelement mittels eines Gelenks an dem Kontaktelement angeordnet sein und dabei insbesondere bezüglich einer Schwenkachse schwenkbar sein, welche parallel zu der Erstreckungsrichtung ist. Vorteilhaft handelt es sich bei der Vorspanneinrichtung um eine Feder, insbesondere eine Spiralfeder.

Bei einer weiteren vorteilhaften Ausführungsform ist in eine vorgegebene Öffnung des Kontaktelements ein insbesondere stangenförmiger Körper einschiebbar, wobei durch das Einschieben dieses stangenförmigen Körpers wenigstens ein Spannelement gegenüber dem Träger des Kontaktelements geschwenkt wird. Insbesondere handelt es sich hierbei um eine Bewegung, mit der das Spannelement zurückgezogen wird, insbesondere radial bezüglich des Kontaktelements eingezogen wird. Auf diese Weise kann der stangenförmige Körper insbesondere als Montierhilfe dienen, um den Hüllenkörper an den Kontaktelementen leichter anbringen zu können. Bevorzugt ragt wenigstens ein Abschnitt des Spannelements in einen Querschnitt der besagten Öffnung hinein, wenn sich in der Öffnung kein stangenförmiger Körper befindet. Durch das Einführen des stangenförmigen Körpers, wird dieser Abschnitt nach außen gedrängt. Bevorzugt ist das Spannelement wenigstens abschnittsweise aus einem Kunststoff hergestellt und ist insbesondere in dem Bereich, der an dem Hüllenkörper anliegen soll, aus einem Kunststoff hergestellt. Bevorzugt handelt es sich bei den Spannelementen um Klemmhebel.

Bevorzugt weist das Kontaktelement wenigstens zwei der besagten Spannelemente auf und besonders bevorzugt wenigstens drei derartige Spannelemente. Dabei sind diese Spannelemente bevorzugt jeweils um vorgegebene Schwenkachsen schwenkbar, wobei diese Schwenkachsen bevorzugt parallel zueinander sind. Bevorzugt sind die Spannelemente in einer Umfangseinrichtung der Kontaktelemente gleichmäßig verteilt.

Bei einer weiteren vorteilhaften Ausführungsform ist der Hüllenkörper beweglich gegenüber dem Träger. So ist es möglich, dass die Kontaktelemente verstellt werden und mit den Kontaktelementen auch der Hüllenkörper.

Bei einer weiteren vorteilhaften Ausführungsform sind die Kontaktelemente gegenüber der Erstreckungsrichtung in einer Ebene drehbar, welche senkrecht zu der Erstreckungsrichtung steht. So ist es denkbar, dass wie oben erwähnt, die Kontaktelemente hintereinander angeordnet sind und die Erstreckungsrichtung jeweils senkrecht zu den einzelnen Kontaktelementen steht, und auf diese Weise die Kontaktelemente gegenüber der Erstreckungsrichtung gedreht werden können. Es wäre jedoch auch möglich, dass die Kontaktelemente gegenüber der Erstreckungsrichtung verkippt werden, insbesondere bezüglich einer Achse, welche senkrecht zu der Erstreckungsrichtung steht und welche auch parallel zu den zu transportierenden Behältnissen steht und welche insbesondere vertikal verläuft. Auch durch eine derartige Verkippung könnte eine Radiusveränderung erreicht werden.

Bei einer weiteren vorteilhaften Ausführungsform sind die Kontaktelemente drehbar gegenüber dem Träger angeordnet. Hier könnten beispielsweise Lagerstellen vorgesehen sein, mittels denen erreicht wird, dass die Kontaktelemente zwar in der Erstreckungsrichtung fest sind, jedoch gleichwohl beweglich gegenüber dem Träger angeordnet sind. Es wäre jedoch auch möglich, dass der Träger in seiner Gesamtheit bezüglich der Erstreckungsrichtung drehbar ist und in diesem Falle die Kontaktelemente gemeinsam mit dem Träger gedreht werden.

Bei einer weiteren vorteilhaften Ausführungsform ist ein Außenquerschnitt der Kontaktelemente insbesondere zu Montagezwecken des Hüllenkörpers verstellbar.

Die vorliegende Erfindung ist weiterhin auf eine Transporteinrichtung zum Transportieren von Behältnissen mit wenigstens einer Führungseinrichtung der oben beschriebenen Art gerichtet. Vorteilhaft weist die Transporteinrichtung wenigstens einen Träger auf, an dem die Behältnisse transportiert werden können. So wäre es denkbar, dass die Behältnisse mittels eines Trägers und insbesondere mittels eines drehbaren Trägers transportiert werden, an dessen Außenumfang jeweils Ausnehmungen zur Aufnahme der Behältnisse angeordnet sind. Die hier beschriebene Führungseinrichtung kann als Gegenelement wirken, mittels dessen die Behältnisse geführt werden.

Daneben wäre es jedoch auch denkbar, dass die Führungseinrichtung an dem drehbaren Träger angeordnet ist. Bevorzugt weist die Transporteinrichtung eine erste Führungseinrichtung der oben beschriebenen Art und eine zweite Führungseinrichtung der oben beschriebenen Art auf und die Kunststoffbehältnisse werden bevorzugt zwischen diesen beiden Führungseinrichtungen transportiert. Bevorzugt werden dabei die Behältnisse wenigstens zeitweise von beiden Führungseinrichtungen kontaktiert und/oder zwischen beiden Führungseinrichtungen geführt.

Bei einer weiteren vorteilhaften Ausführungsform ist wenigstens eine der hier beschriebenen Führungseinrichtungen stationär angeordnet. Bevorzugt ist die andere Führungseinrichtung beweglich und insbesondere drehbar angeordnet.

In Abhängigkeit von den jeweiligen Behältnissen ist es dabei wie oben erwähnt möglich, die Position der Kontaktfläche gegenüber der Erstreckungsrichtung zu verändern. Bevorzugt werden dabei die Kontaktflächen beider Führungseinrichtungen verändert, insbesondere um auch bei sich verändernden Behältnisgeometrien gleiche Teilkreise für die Transportbewegungen beizubehalten.

Bei einer weiteren vorteilhaften Ausführungsform weist die Transporteinrichtung wenigstens zwei Halteelemente auf, um auch die Führungseinrichtung in einer vorgegebenen Position zu halten. So könnten beispielsweise an den Endbereichen der Führungseinrichtung Halteelemente, wie Träger, angeordnet sein. Bei einer weiteren vorteilhaften Ausführungsform weist die Halteeinrichtung eine Stelleinrichtung zum Verstellen der Führungseinrichtung auf. Insbesondere kann, wie oben erwähnt, die Positionierung der Kontaktoberfläche auf diese Weise verändert werden.

Weitere Vorteile und Ausführungsformen ergeben sich aus den beigefügten Figuren.

Darin zeigen:
- Fig. 1a - 1c: drei Darstellungen einer erfindungsgemäßen Führungseinrichtung;
- Fig. 2a - 2c: die Führungseinrichtung aus den Figuren 1a - 1c in einer ersten Positionierung;
- Fig. 3a - 3c: die Führungseinrichtung aus den Figuren 1a - 1c in einer zweiten Positionierung;
- Fig. 4: eine Darstellung einer Vorrichtung zum Transportieren von Behältnissen in einer erfindungsgemäßen Führungseinrichtung;
- Fig. 5: eine Darstellung eines Kontaktelements;
- Fig. 6a - 6c: drei Darstellungen von an ihrem Träger angeordneten Kontaktelementen;
- Fig. 7a, 7b: zwei Darstellungen von Kontaktelementen einer Innenführung;
- Fig. 8a, 8b: zwei Darstellungen von Kontaktelementen der Innenführung in einer zweiten Positionierung;
- Fig. 9a - 9g: detailliertere Darstellungen eines Kontaktelements.

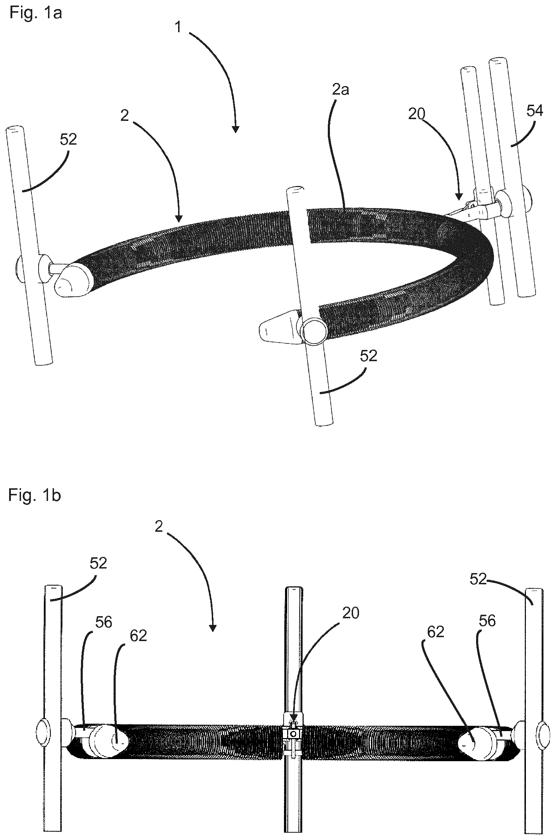

Die Figuren 1a - 1c zeigen eine erste Ausgestaltung einer erfindungsgemäßen ersten Führungseinrichtung 1. Diese Führungseinrichtung 1 weist eine in ihrer Gesamtheit mit 2 bezeichnete Kontaktiereinrichtung auf. Diese Kontaktiereinrichtung bildet eine Kontaktoberfläche 2a aus, welche im Betrieb die Behältnisse führt und zwar über einen Kontakt mit einem Außenumfang dieser Behältnisse. Die Bezugszeichen 52 kennzeichnen endseitige Träger, welche (mittels Haltestangen 56) zum Halten der Kontaktiereinrichtung dienen. Das Bezugszeichen 54 kennzeichnet einen weiteren Träger, welches zum Halten eines zentralen bzw. mittigen Bereichs der Kontaktiereinrichtung dient. Das Bezugszeichen 20 kennzeichnet einen Stellmechanismus, der wie unten genauer beschrieben wird zum Verändern der Kontaktoberfläche 2a dient, bzw. genauer der dazu dient, um die Kontaktoberfläche 2a radial nach innen zu verstellen.

Figur 1b zeigt eine Seitenansicht der in Figur 1a gezeigten Vorrichtung. Bei dieser Ausgestaltung erkennt man auch endseitig Elemente 62 der Kontaktiereinrichtung, welche diese jeweils abschließen. Diese Abschlusselemente 62 weisen dabei Schrägen auf, in welche die zu transportierenden Kunststoffvorformlinge auch eingeführt werden können.

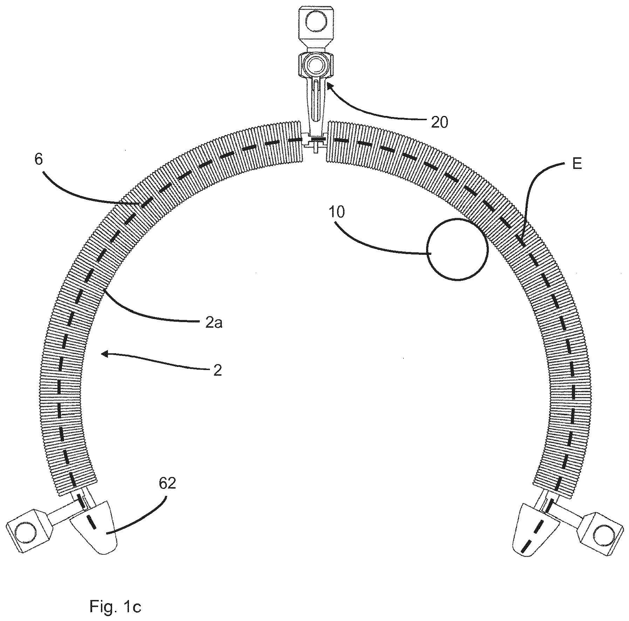

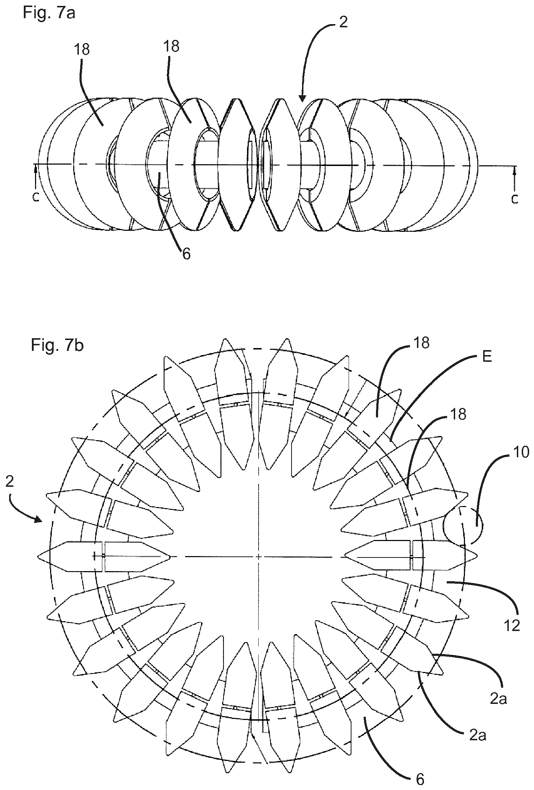

Figur 1c zeigt eine Draufsicht auf eine erfindungsgemäße Führungseinrichtung und genauer auf die Kontaktiereinrichtung 2. Hier ist auch ein Behältnis 10 schematisch dargestellt, welches im Arbeitsbetrieb entlang dieser Kontaktiereinrichtung transportiert wird. Eine wie oben beschriebene Verstellung der Kontaktiereinrichtung bewirkt, dass der Innenradius der Kontaktoberfläche 2a weiter nach innen oder weiter nach außen verstellt werden kann. Wie unten genauer dargelegt wird, kann diese Verstellung zentral durch den Stellmechanismus 20 erfolgen. Das Bezugszeichen E kennzeichnet die Erstreckungseinrichtung, dass genauer die geometrische Erstreckungseinrichtung, entlang derer sich die Kontaktiereinrichtung 2 erstreckt. Die Kontaktoberfläche 2a ist gegenüber dieser Erstreckungseinrichtung veränderbar und insbesondere in einem Abstand veränderbar, der senkrecht zu der Erstreckungsrichtung E steht. Zum Transport der Behältnisse kann innerhalb der Kontaktoberfläche 2a ein Transportstern vorgesehen sein welcher die Behältnisse transportiert. Auch dieser Transportstern kann (vgl. Fig. 7a - 8b) eine Führungseinrichtung der hier beschriebenen Art aufweisen.

Das Bezugszeichen 6 kennzeichnet einen Hüllenkörper, der im Inneren dieses Hüllenkörpers angeordnete Kontaktelemente umgibt. Durch eine Verstellung der Kontaktelemente kann auch die Positionierung der Kontaktoberfläche 2a geändert werden. Wie oben erwähnt, ist dieser Hüllenkörper bevorzugt flexibel ober torsionsfest ausgeführt. Bevorzugt wirkt dieser Hüllenkörper auch als Kopplungseinrichtung welche bei einer Verstellung die Drehbewegungen der einzelnen Kontaktelemente miteinander koppelt.

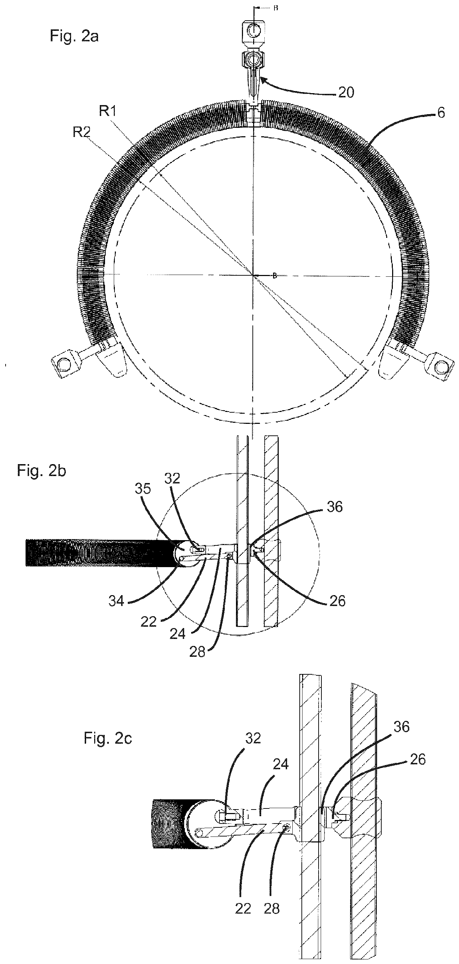

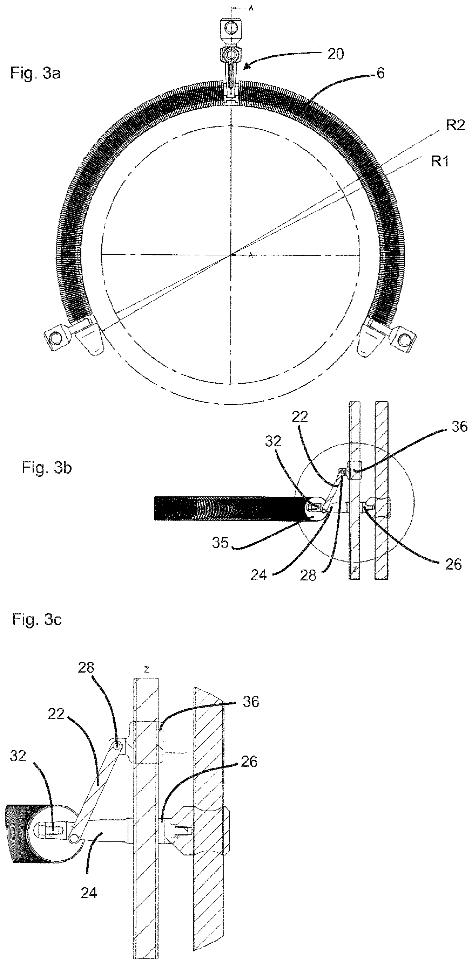

Die Figuren 2a - 2c zeigen eine detailliertere Darstellung der Führungseinrichtung. Man erkennt (im Vergleich mit den Fig. 3a, 3b) hier, dass die Kontaktoberfläche 2a zwischen zwei Radien insbesondere stufenlos einstellbar ist. Das Bezugszeichen R1 kennzeichnet dabei den Teilkreisradius also den Teilkreis, entlang dessen die Behältnisse transportiert werden. Das Bezugszeichen R2 kennzeichnet den bei den Fig. 2a - 2c eingestellten Radius. Zu diesem Zwecke ist es möglich, dass zwei Stellglieder gegeneinander verstellt oder verdreht werden und auf diese Weise im Inneren des Hüllenkörpers 6 angeordnete Kontaktelemente (insbesondere gemeinsam mit dem Hüllenkörper 6) verstellt werden können. So könnten äußere Kontaktelemente Anlenkelemente aufweisen, welche Bestandteile des Stellmechanismus 20 sind.

Figur 2b zeigt eine Detaildarstellung des Stellmechanismus 20. Man erkennt hier eine erste Stange, welche an einem ersten Punkt bzw. Gelenk 32 der Kontaktiereinrichtung 2 angelenkt ist. Eine zweite Stange 22, die mittels eines Gelenks 28 schwenkbar ist an einem zweiten Punkt 34 der Kontaktiereinrichtung angeordnet. Durch eine relative Verschiebung dieser beiden Schwenkstangen 22, 24 kann die Kontaktiereinrichtung verdreht werden. Dies ist auch in Figur 2c gezeigt. Dabei kann beispielsweise ein Schlitten 36 gegenüber der Trägerstange 38 verschoben werden. Genauer kann daher die Platte 35 geschwenkt werden und über den torsionsfreien Hüllenkörper auch die weiteren im Inneren des Hüllenkörpers angeordneten Kontaktelemente (jeweils gegenüber dem stationären Träger). Das Bezugszeichen 26 kennzeichnet ein weiteres Gelenk bzw. Anlenkmittel zum Anlenken der Stange 24.

Die Figuren 3a - 3c zeigen eine weitere Positionierung der Kontaktiereinrichtung mit dem Innenradius R2. Die unterschiedliche Positionierung ist insbesondere in den Figuren 3b und 3c erkennbar. Hier wurde der Schlitten 36 nach oben geführt und auf diese Weise auch die Gelenkstange 22 nach oben gezogen und damit auch ein Gelenkpunkt 34 gegenüber dem anderen Gelenkpunkt 32 an der Kontaktiereinrichtung 2 verstellt. Auf diese Weise können im Inneren des Hüllenkörpers 6 angeordnete Kontaktelemente ebenfalls verdreht werden und der Radius der Kontaktoberfläche kann eingestellt werden.

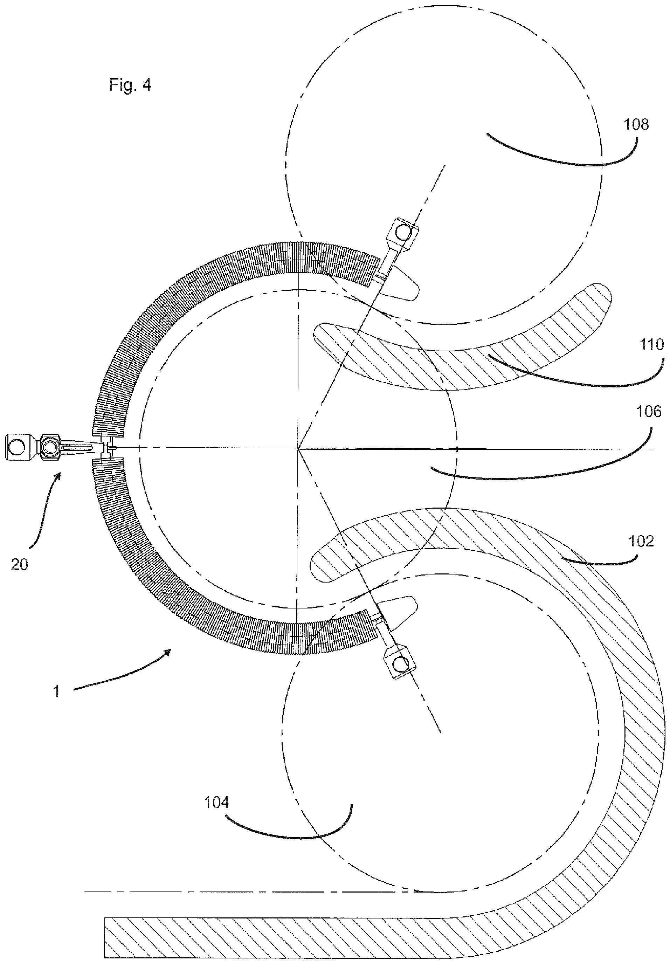

Figur 4 zeigt eine Gesamtdarstellung einer Vorrichtung zum Transportieren von Behältnissen, welche eine erfindungsgemäße Führungseinrichtung 1 aufweist. Dabei ist es möglich, dass Transportsterne 104, 106 und 108 (nur grob schematisch durch die jeweiligen Teilkreise veranschaulicht) vorgesehen sind, welche die Behältnisse beispielsweise an einem Außenumfang transportieren. Daneben sind auch feststehende Führungskurven 102 und 108 vorgesehen. Zwischen diesen beiden Führungskurven ist die erfindungsgemäße Führungseinrichtung 1 angeordnet, welche eine Anpassung des Führungsdurchmessers erlaubt. Der Transportstern 104 kann eine Führungseinrichtung 1 aufweisen, so dass die Behältnisse hier zwischen zwei erfindungsgemäßen Führungseinrichtungen 1 geführt werden. Bei einer Umstellung auf andere Behältnisgeometrien, insbesondere andere Behältnisradien kann durch eine Umstellung beider Führungseinrichtungen ein Teilkreisradius beibehalten werden.

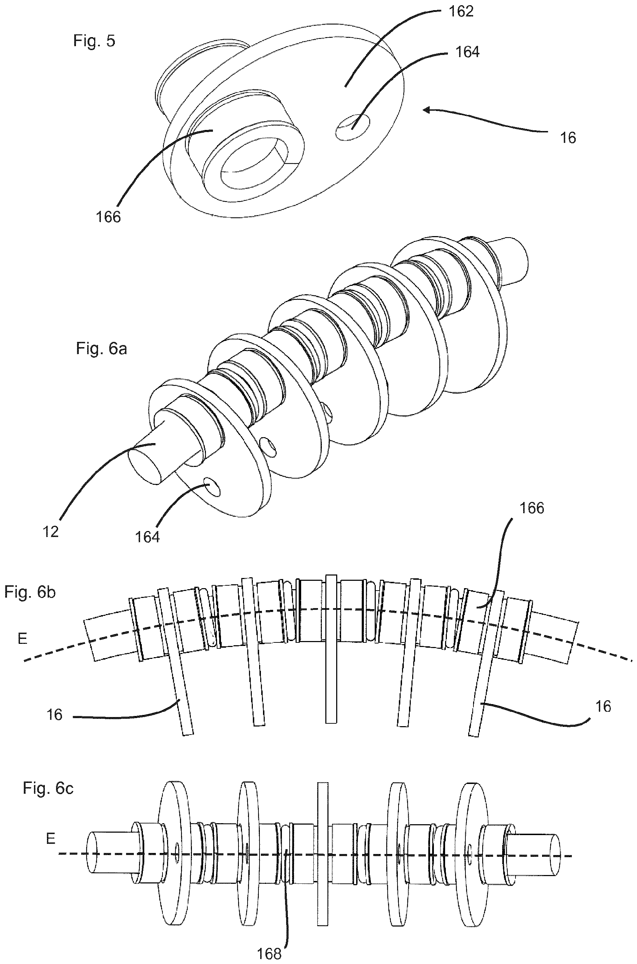

Figur 5 zeigt eine Darstellung eines Kontaktelements 16. Dieses Kontaktelement 16 weist dabei einen plattenförmigen Grundkörper 82 auf, der bezüglich einer geometrischen Schwenkachse, welche hier zentral durch die Führungshülse 166 verläuft, exzentrisch angeordnet ist. Damit ist bei dieser Ausgestaltung das Kontaktelement 16 gegenüber einem (in Figur 5 nicht gezeigten) Träger schwenkbar. Das Bezugszeichen 164 kennzeichnet eine weitere Öffnung, durch welche eine Schwenkstange geschoben werden kann. Wenn diese Schwenkstange gegenüber dem nicht gezeigten zentralen Träger geschwenkt wird, kann auf diese Weise auch das Kontaktelement 16 gegenüber dem Träger verdreht werden. Aufgrund der Exzentrizität ergibt sich eine Verschiebung der äußeren Oberfläche bzw. des Randes des Kontaktelements. Auf diese Weise kann insgesamt ein Führungsdurchmesser- oder radius verändert werden.

Figur 6a zeigt eine Darstellung bei der eine Vielzahl von Kontaktelementen 16 schwenkbar bzw. drehbar an einem Träger 12 angeordnet ist. Auch hier erkennt man wieder die exzentrische Anordnung und die Möglichkeit durch ein Schwenken der Kontaktelemente auch einen Transportradius zu verändern.

Figur 6b zeigt eine weitere Darstellung der Kontaktelemente 16, welche an dem Träger 12 angeordnet sind und zwar drehbar in einer Ebene, die jeweils senkrecht zu der Erstreckungsrichtung E steht. Auch ist in Figur 6b wiederum die exzentrische Lagerung der Kontaktelemente 16 zu erkennen.

Zwischen den einzelnen Kontaktelementen 16 können auch gelenkartige Verbindungen vorgesehen sein, welche ein Anstellen einer Gelenkplatte bzw. des Kontaktelements gegenüber der benachbarten Gelenkplatte unter einem vorgegebenen vom Nullgrad verschiedenen Winkel ermöglichen und welche auch eine gemeinsame Drehung aller Kontaktelemente gemeinsam gegenüber der Erstreckungsrichtung zulassen.

Dabei sind, wie sich dies aus Figur 6c ergibt, diese einzelnen gelenkartigen Elemente 168 jeweils zwischen benachbarten Kontaktelementen 16 angeordnet. Man erkennt weiterhin, dass der Grundträger 162 eine elliptische Gestalt aufweist. Dies hat den Vorteil, dass auf diese Weise eine stufenlose Umstellung der Radien von einem ersten Extremwert (langer Halbdurchmesser der Ellipse) auf einen zweiten Extremradius (kurzer Halbdurchmesser der Ellipse) ermöglicht wird.

Die Figuren 7a, 7b zeigen eine weitere Ausführungsform einer erfindungsgemäßen Führungseinrichtung 1. Diese Ausführungsform dient für Innenführungen und/oder für Transportsterne. Für diese Ausführungsform sind äußere Kontaktelemente bzw. Halteeinrichtungen 18 hier in Form von scheibenartigen Gebilden an dem Hüllenkörper 6 ebenfalls wieder drehbar (gegenüber der Erstreckungseinrichtung E jedoch bevorzugt fest gegenüber dem Hüllenkörper 6 angeordnet. Im Inneren des Hüllenkörpers 6 sind auch hier die oben beschriebenen Kontaktelemente vorgesehen. Die äußeren Kontaktelemente 18 können dabei beispielsweise an dem Hüllenkörper 6 angeklemmt sein. Diese äußeren Kontaktelemente können dabei beispielsweise zweiteilig ausgebildet sein und zur Montage auf den Hüllenkörper 6 aufgeschraubt werden. Die äußeren Kontaktelemente 18 bilden jeweils die Kontaktoberfläche 2a für die Behältnisse aus. Bei dieser Ausführungsform liegen also die Behältnisse bevorzugt nicht unmittelbar an dem Hüllenkörper 6 an.

Je nach Drehstellung dieser Kontaktelemente 18 gegenüber dem Träger 12 kann auch hier die Position der Kontaktoberfläche 2a gegenüber der Erstreckungsrichtung verändert werden. Dies bedeutet, dass auch hier die äußeren Kontaktelemente 18 exzentrisch (gegenüber der Erstreckungsrichtung E) angeordnet sind. Wie in Figur 7b gezeigt kann die hier gezeigte Anordnung auch verwendet werden, in der Art, dass zu führende Behältnisse 10 Zwischenräume zwischen zwei benachbarten Kontaktelementen 18 einliegen und beispielsweise gegenüber einer feststehenden Wandung (welche vorteilhaft als eine erfindungsgemäße Führungseinrichtung ausgebildet ist) transportiert werden. Auch auf diese Weise kann durch eine Drehung der Kontaktelemente gegenüber dem Träger ein Führungsradius verändert werden. Die Behältnisse werden hier jeweils durch zwei benachbarte äußere Kontaktelemente bzw. zwischen diesen geführt. Zu diesem Zweck können die äußeren Kontaktelemente schräge Führungsflächen aufweisen, welche auch bei einer radialen Verstellung ein sicheres Führen der Behältnisse zwischen jeweils zwei benachbarten äußeren Kontaktelementen ermöglichen. Bei der in den Fig. 7a - 8b gezeigten Ausführungsform sind damit auch die äußeren Kontaktelemente 18 Bestandteil der Kontaktiereinrichtung 2.

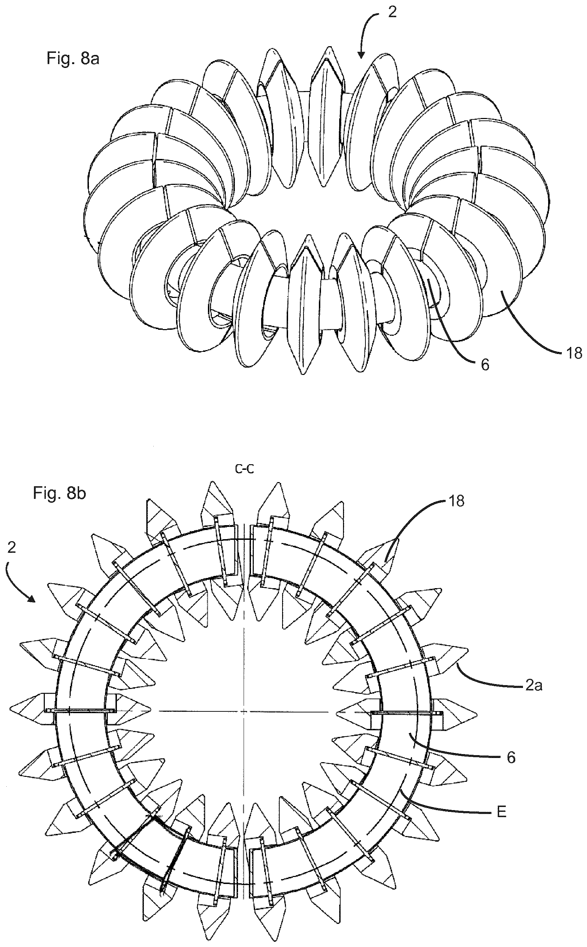

Figur 8a zeigt eine weitere Positionierung einer entsprechenden Führungseinrichtung. Auch hier sind wieder die Kontaktelemente 18 vorgesehen, die drehbar an dem Träger 12 bzw. dem Hüllenkörper 6 angeordnet sind. Bei dieser Positionierung sind, wie sich aus einem Vergleich zwischen den Figuren 8b und 7b ergibt, die einzelnen Elemente in radialer Richtung nach außen gestellt. Auf diese Weise kann der Teilkreis auch bei unterschiedlichen Behältnisgrössen aufrechterhalten werden.

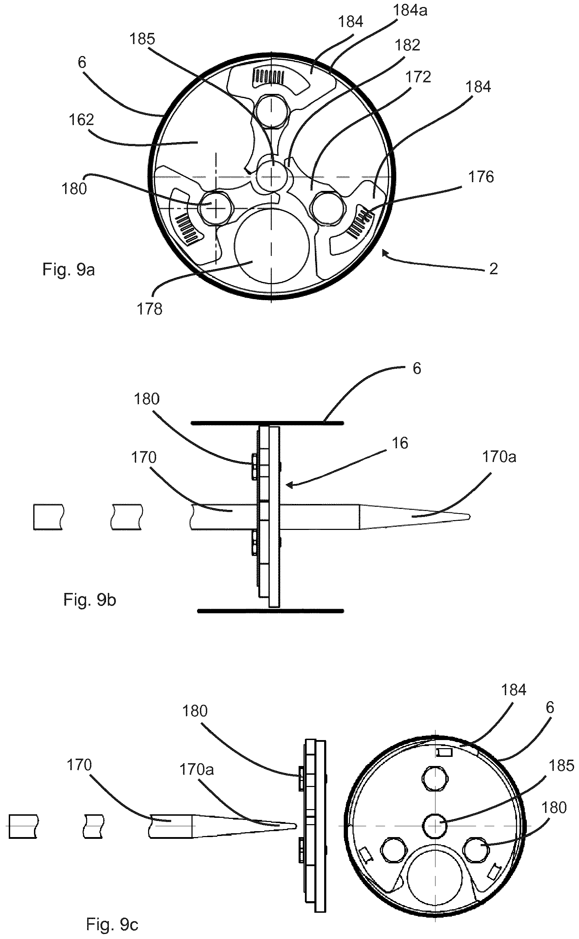

Figuren 9a bis 9g zeigen unterschiedliche Ausgestaltungen der Kontaktelemente 16. In die Kontaktelemente sind Spannmechanismen integriert, welche eine Verspannung des Kontaktelements gegenüber dem Hüllenkörper 6 ermöglicht. Bei der in Figur 9a gezeigten Ausführungsform sind insgesamt drei Klemmkörper bzw. Klemmhebel 184 vorgesehen, welche unter der Kraft von Federn 176 so verstellt oder gedrängt werden, dass ein Abschnitt 184a radial nach außen vorsteht. Das Bezugszeichen 172 kennzeichnet einen unteren Abschnitt des Klemmhebels 172, 184, der mittels eines Gelenks 180 schwenkbar gelagert ist. Durch eine entsprechende Schwenkung kann, wie oben erwähnt, der Abschnitt 184a radial nach außen gedrängt werden und insbesondere gegen den Hüllenkörper 6 gedrängt werden. Das Bezugszeichen 182 kennzeichnet einen Endabschnitt des Klemmhebels 184, der in die Öffnung 185 hineinragt und der bei Einschieben des Spreizdorns weggestellt bzw. nach aussen gedrängt wird

Das Bezugszeichen 178 kennzeichnet eine Öffnung, durch welche der Träger (nicht gezeigt) schiebbar ist. Diese Öffnung hat einen kreisrunden Querschnitt, so dass ein ebenfalls kreisrunder Träger einführbar ist und so das Kontaktelement gegenüber dem Träger gedreht werden kann. Das Federelement 146 ist insbesondere für einen Griff mit dem Hüllenkörper ausgelegt, ohne hierbei den Hüllenkörper zu beschädigen. Der Klemmhebel 174 dient dazu, um ein Verstelldrehmoment auf die Grundwelle bzw. das jeweilige Kontaktelement zu übertragen. Dieser Klemmhebel kann dabei aus einem Kunststoff bestehen, es wäre jedoch auch ein Elastomereinsatz denkbar, um den Hüllenkörper nicht zu beschädigen und um die Griffsicherheit zu erhöhen.

Figur 9b zeigt eine Darstellung bei der ein Spreizdorn 170 in das Kontaktelement 12 eingeschoben wurde. Dieser Spreizdorn weist einen Grundkörper 170 und einen Spreizkegel 170a auf. In der gezeigten Darstellung ist der Spreizdorn rund ausgebildet, er kann jedoch auch als Formmaterial, beispielsweise Sechskantstahl, ausgebildet sein. Ein Sechskantstahl bietet sich in der vorliegenden Ausführungsform an, da drei Klemmstücke bzw. Klemmkörper vorhanden sind. Falls beispielsweise vier Klemmstücke verwendet werden, könnte auch ein Vierkantmaterial verwendet werden.

Damit können die einzelnen Klemmsysteme 172, 176, 184 auf dem Spreizdorn 170 insbesondere beim Überschieben des Hüllenkörpers nicht verdrehen und das spätere folgende Überziehen des montierten Systems auf die gebogene Welle (welche den Radius für die Garnitur darstellt) wird vereinfacht. Damit dient der Spreizdorn insbesondere auch als Montagehilfe. Durch das Einführen des Spreizdorns werden die einzelnen Klemmelemente 176 zurückgestellt und der Hüllenkörper kann leichter über die einzelnen Kontaktelemente gezogen werden. Nach dem Überziehen des Hüllenkörpers kann der Spreizdorn wieder entfernt werden, und die Klemmhebel drängen sich (von innen) an den Hüllenkörper 6.

In Figur 9c ist eine derartige Situation gezeigt, bei der der Spreizdorn 170 wieder aus dem Kontaktelement ausgefahren ist. Man erkennt, dass hier der Klemmhebel 184 sich wieder gegen die Innenwandung des Hüllenkörpers 6 drückt bzw. verspannt. Auch ist hier die Öffnung 185 erkennbar, in welche der Spreizdorn 170 eingeschoben wird. In der hier gezeigten Situation sind die Klemmhebel 184 ausgefahren und mit dem Herausziehen des Spreizdorns werden die einzelnen Klemmbacken durch den Federdruck der Feder 176 gegen die Innenwand des Hüllenkörpers gedrückt. Damit wird im Einzelfall eingeleitete Drehbewegung des Rohrs gut auf die gebogene Welle übertragen. So kann eine höhere Qualität der Verstellung erreicht werden, da alle Klemmsysteme der Verdrehbewegung folgen.

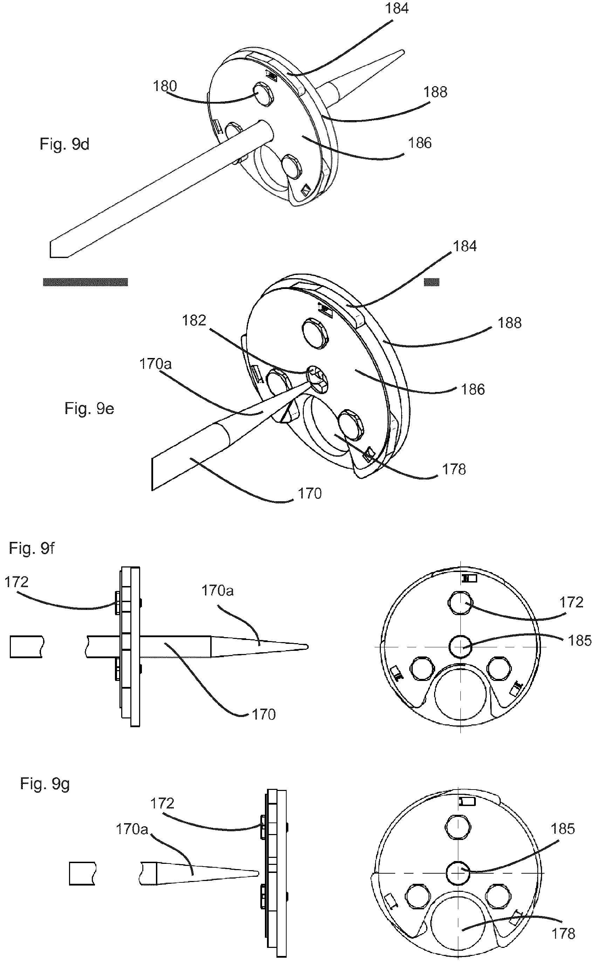

Figur 9d zeigt eine Darstellung, bei der der Spreizdorn in das Kontaktelement 12 eingeschoben ist. In diesem Zustand sind die Klemmhebel 184 in Richtung des Mittelpunkts zurückgezogen, sodass der Hüllenkörper leichter aufgeschoben werden kann. Bei der in Figur 9e gezeigten Situation ist der Spreizdorn 170 noch nicht in der Öffnung 185 und aus diesem Grund sind die Klemmhebel 184 nach außen gestellt (unter der Krafteinwirkung der Federelemente 176). Diese Situation ist auch in Figur 9g gezeigt. Figur 9f zeigt eine Situation, bei der das Spreizelement eingesetzt ist und damit auch die einzelnen Klemmhebel 184 zurückgezogen sind. Die Bezugszeichen 186, 188 kennzeichnen Montageplatten welche zum Montieren der Klemmhebel dienen. Diese beiden Montageplatten bilden hier den Grundträger 162.

### Bezugszeichenliste

- 1: Führungseinrichtung
- 2: Kontaktiereinrichtung
- 2a: Kontaktoberfläche
- 6: Hüllenkörper
- 10: Behältnis
- 12: Träger
- 16: Kontaktelement
- 18: äußeres Kontaktelement
- 20: Stellmechanismus
- 22, 24: Stange
- 26, 28, 32: Gelenk
- 34: Punkt
- 35: Platte
- 36: Schlitten
- 38: Trägerstange
- 52: endseitiger Träger
- 54: weiterer Träger
- 56: Haltestange
- 62: Abschlusselemente
- 82: Grundkörper
- 104, 106, 108: Transportsterne
- 102,110: Führungskurven
- 162: Grundträger
- 164: weitere Öffnung
- 166: Führungshülse
- 168: gelenkartiges Element
- 170: Spreizdorn
- 170a: Spreizkegel
- 172: unterer Abschnitt des Klemmhebels
- 176: Feder
- 178: Öffnung für Träger
- 180: Gelenk
- 184: Klemmhebel
- 184a: Abschnitt des Klemmhebels
- 185: Öffnung
- 186, 188 E: Erstreckungsrichtung
- R1: Teilkreis
- R2: durch die Kontaktoberfläche 2a gebildeter Radius

## Patentansprüche

1. Führungseinrichtung (1) zum Kontaktieren und Führen von Objekten und insbesondere von Behältnissen (10) mit einer Kontaktiereinrichtung (2), welche dazu geeignet und bestimmt ist, eine Aussenoberfläche des zu führenden Objektes (10) mittels einer Kontaktoberfläche (2a) zu kontaktieren, wobei diese Kontaktiereinrichtung (2) einen Träger (12) aufweist, der sich entlang einer vorgegebenen Erstreckungsrichtung (E) erstreckt,
wobei an dem Träger (12) eine Vielzahl von Kontaktelementen (16, 18) angeordnet sind, wobei diese Kontaktelemente (16, 18) jeweils drehbar gegenüber der Erstreckungsrichtung (E) des Trägers (12) sind derart, dass durch diese Drehbewegung ein Abstand zwischen wenigstens einem Abschnitt der Kontaktoberfläche (2a) und der Erstreckungsrichtung (E) veränderbar ist, wobei die Führungseinrichtung einen Hüllenkörper (40, 42) aufweist, der den Träger wenigstens abschnittweise umgibt, **dadurch gekennzeichnet, dass** dieser Hüllenkörper (6) wenigstens einen Abschnitt des Trägers (12) in seiner Erstreckungsrichtung vollständig in seiner Umfangsrichtung umgibt, und der besagte Hüllenkörper (6) umgibt auch die Kontaktelemente (16, 18), und weiter wobei damit sowohl der Träger (12) als auch die Kontaktelemente (16, 18) innerhalb des genannten Hüllenkörpers (6) angeordnet sind, wobei der Hüllenkörper (6) im Wesentlichen torsionssteif ausgebildet ist, sodass es möglich ist, dass der Hüllenkörper (6) zwar biegbar ist, im Wesentlichen jedoch nicht tordierbar ist und durch diese Torsionssteifigkeit eine Kopplung von Drehbewegungen der einzelnen Kontaktelemente (16, 18) untereinander erreicht ist.

2. Führungseinrichtung (1) nach Anspruch 1,
**dadurch gekennzeichnet, dass**
die Führungseinrichtung (1) wenigstens eine Stelleinrichtung (20) aufweist, um die Drehstellung wenigstens eines Kontaktelements (16, 18) gegenüber der Erstreckungsrichtung (E) zu verändern.

3. Führungseinrichtung (1) nach Anspruch 2,
**dadurch gekennzeichnet, dass**
die Führungseinrichtung (1) eine Kopplungseinrichtung (22) aufweist, welche eine Drehbewegung eines ersten Kontaktelements (16, 18) gegenüber der Erstreckungsrichtung (E) mit der Drehbewegung eines zweiten Kontaktelements (16, 18) gegenüber der Erstreckungsrichtung (E) koppelt.

4. Führungseinrichtung (1) nach wenigstens einem der vorangegangenen Ansprüche,
**dadurch gekennzeichnet, dass**
die Kontaktelemente (16, 18) entlang der Erstreckungsrichtung (E) benachbart zueinander angeordnet sind.

5. Führungseinrichtung (1) nach zumindest einem der vorhergehenden Ansprüche,
**dadurch gekennzeichnet, dass**
der Hüllenkörper (6) die Kontaktoberfläche (2a) zum Kontaktieren der Behältnisse (10) ausbildet.

6. Führungseinrichtung (1) nach zumindest einem der vorhergehenden Ansprüche,
**dadurch gekennzeichnet, dass**
der Hüllenkörper (6) elastisch ist.

7. Führungseinrichtung (1) nach zumindest einem der vorhergehenden Ansprüche,
**dadurch gekennzeichnet, dass**
der Hüllenkörper (6) unter Spannung an den Kontaktelementen anliegt.

8. Führungseinrichtung (1) nach wenigstens einem der vorangegangenen Ansprüche,
**dadurch gekennzeichnet, dass**
die Kontaktelemente (16, 18) gegenüber der Erstreckungsrichtung (E) in einer Ebene drehbar sind, welche senkrecht zu der Erstreckungsrichtung (E) steht.

9. Führungseinrichtung (1) nach wenigstens einem der vorangegangenen Ansprüche,
**dadurch gekennzeichnet, dass**
die Kontaktelemente (16, 18) drehbar gegenüber dem Träger gelagert sind.

10. Transporteinrichtung (50) zum Transportieren von Behältnissen (10) mit wenigstens einer Führungseinrichtung (1) nach wenigstens einem der vorangegangenen Ansprüche.

11. Transporteinrichtung (50) nach Anspruch 10,
**dadurch gekennzeichnet, dass**
die Transporteinrichtung (50) zwei Führungseinrichtungen nach wenigstens einem der vorangegangenen Ansprüche aufweist und die Behältnisse (10) zwischen diesen beiden Führungseinrichtungen transportierbar sind.

## Claims

1. A guiding device (1) for contacting and guiding objects and in particular containers (10) with a contacting device (2) which is suitable and intended for contacting an outside surface of the object (10) to be guided by means of a contact surface (2a), wherein this contacting device (2) comprises a carrier (12) extending along a predetermined extension direction (E),
wherein a plurality of contact elements (16, 18) are arranged on the carrier (12), wherein these contact elements (16, 18) are each rotatable relative to the extension direction (E) of the carrier (12) such that a spacing between at least a portion of the contact surface (2a) and the extension direction (E) is variable by means of this rotational motion,
**characterised in that**
this shroud body (6) surrounding at least a portion of the carrier (12) fully in its circumferential direction in its extension direction, and the said shroud body (6) also surrounds the contact elements (16, 18) and further wherein both the carrier (12) and the contact elements (16, 18) are arranged within the said shroud body (6), wherein the shroud body (6) is configured to be substantially torsionally rigid, so that it is possible for the shroud body to be flexible but substantially unable to be twisted and due to this torsional rigidity, a coupling of rotational motion of the individual contact elements (16, 18) with each other is achieved.

2. The guiding device (1) according to claim 1,
**characterised in that**
the guiding device (1) comprises at least one setting device (20) for varying the rotary position of at least one contact element (16, 18) relative to the extension direction (E).

3. The guiding device (1) according to claim 2,
**characterised in that**
the guiding device (1) comprises a coupling device (22) which couples a rotational motion of a first contact element (16, 18) relative to the extension direction (E) with the rotational motion of a second contact element (16, 18) relative to the extension direction (E).

4. The guiding device (1) according to at least one of the preceding claims,
**characterised in that**
the contact elements (16, 18) are arranged adjacent one another along the extension direction (E).

5. The guiding device (1) according to at least one of the preceding claims,
**characterised in that**
the shroud body (6) forms the contact surface (2a) for contacting the containers (10).

6. The guiding device (1) according to at least one of the preceding claims,
**characterised in that**
the shroud body (6) is elastic.

7. The guiding device (1) according to at least one of the preceding claims,
**characterised in that**
the shroud body (6) lies against the contact elements under tension.

8. The guiding device (1) according to at least one of the preceding claims,
**characterised in that**
the contact elements (16, 18) are rotatable relative to the extension direction (E) in a plane which is perpendicular to the extension direction (E).

9. The guiding device (1) according to at least one of the preceding claims,
**characterised in that**
the contact elements (16, 18) are mounted rotatably relative to the carrier.

10. A transport device (50) for transporting containers (10) with at least one guiding device (1) according to at least one of the preceding claims.

11. The transport device (50) according to claim 10,
**characterised in that**
the transport device (50) comprises two guiding devices according to at least one of the preceding claims, and the containers (10) are transportable between these two guiding devices.

## Revendications

1. Dispositif de guidage (1) pour la mise en contact et le guidage d'objets et en particulier de récipients (10) avec un dispositif de contact (2) qui est approprié et destiné à mettre en contact une surface extérieure de l'objet (10) à guider au moyen d'une surface de contact (2a), dans lequel ce dispositif de contact (2) présente un support (12) qui s'étend le long d'un sens d'extension (E) prédéfini,
dans lequel une pluralité d'éléments de contact (16, 18) est agencée au niveau du support (12), dans lequel ces éléments de contact (16, 18) sont respectivement rotatifs par rapport au sens d'extension (E) du support (12) de telle manière que par ce mouvement de rotation, une distance entre au moins une section de la surface de contact (2a) et le sens d'extension (E) soit modifiable, dans lequel le dispositif de guidage présente un corps d'enveloppe (40, 42) qui entoure le support au moins par sections,
**caractérisé en ce que**
ce corps d'enveloppe (6) entoure au moins une section du support (12) dans son sens d'extension complètement dans son sens périphérique, et ledit corps d'enveloppe (6) entoure aussi les éléments de contact (16, 18), et en outre dans lequel non seulement le support (12) mais aussi les éléments de contact (16, 18) sont agencés à l'intérieur du corps d'enveloppe (6) cité, dans lequel le corps d'enveloppe (6) est réalisé de manière sensiblement rigide en torsion de sorte qu'il soit possible que le corps d'enveloppe (6) soit certes flexible, toutefois ne puisse pas sensiblement être tordu et un couplage de mouvements de rotation des éléments de contact (16, 18) individuels entre eux soit atteint par cette rigidité à la torsion.

2. Dispositif de guidage (1) selon la revendication 1,
**caractérisé en ce que**
le dispositif de guidage (1) présente au moins un dispositif de réglage (20) afin de modifier la position de rotation au moins d'un élément de contact (16, 18) par rapport au sens d'extension (E).

3. Dispositif de guidage (1) selon la revendication 2,
**caractérisé en ce que**
le dispositif de guidage (1) présente un dispositif de couplage (22) qui couple un mouvement de rotation d'un premier élément de contact (16, 18) par rapport au sens d'extension (E) avec le mouvement de rotation d'un second élément de contact (16, 18) par rapport au sens d'extension (E).

4. Dispositif de guidage (1) selon au moins l'une quelconque des revendications précédentes,
**caractérisé en ce que**
les éléments de contact (16, 18) sont agencés le long du sens d'extension (E) de manière contiguë l'un à l'autre.

5. Dispositif de guidage (1) selon au moins l'une quelconque des revendications précédentes,
**caractérisé en ce que**
le corps d'enveloppe (6) réalise la surface de contact (2a) pour la mise en contact des récipients (10).

6. Dispositif de guidage (1) selon au moins l'une quelconque des revendications précédentes,
**caractérisé en ce que**
le corps d'enveloppe (6) est élastique.

7. Dispositif de guidage (1) selon au moins l'une quelconque des revendications précédentes,
**caractérisé en ce que**
le corps d'enveloppe (6) repose sous tension contre les éléments de contact.

8. Dispositif de guidage (1) selon au moins l'une quelconque des revendications précédentes,
**caractérisé en ce que**
les éléments de contact (16, 18) sont rotatifs par rapport au sens d'extension (E) dans un plan qui est perpendiculaire au sens d'extension (E).

9. Dispositif de guidage (1) selon au moins l'une quelconque des revendications précédentes,
**caractérisé en ce que**
les éléments de contact (16, 18) sont logés de manière rotative par rapport au support.

10. Dispositif de transport (50) pour le transport de récipients (10) avec au moins un dispositif de guidage (1) selon au moins l'une quelconque des revendications précédentes.

11. Dispositif de transport (50) selon la revendication 10,
**caractérisé en ce que**
le dispositif de transport (50) présente deux dispositifs de guidage selon au moins l'une quelconque des revendications précédentes et les récipients (10) sont transportables entre ces deux dispositifs de guidage.
